# EUROPEAN PATENT APPLICATION

(11) **EP 4 156 543 A1**
(43) Date of publication of application: **29.03.2023**
(21) Application number: 22196483.6
(22) Date of filing: 20.09.2022
(51) Int. Cl.: H04B 7/06, H04B 7/08, H04W 36/30

(54) **METHOD AND APPARATUS FOR BEAM FAILURE RECOVERY PROCEDURE**

(30) Priority: 22.09.2021 US 202163246836 P; 11.07.2022 US 202217861538
(71) Applicant: MediaTek Inc., Hsinchu City 30078 (TW)
(72) Inventor: TSAI, Cheng-Rung, Hsinchu City (TW); YU, Chia-Hao, Hsinchu City (TW)
(74) Representative: Patentship Patentanwaltsgesellschaft mbH

(57) **Abstract**

A beam failure recovery (BFR) procedure is proposed. The network node may allocate one or more New-Beam-Identification Reference-Signal (NBI-RS) resource sets for a user equipment (UE) and report the allocated NBI-RS resource sets to the UE, wherein the NBI-RS resource sets may be associated with a serving Transmission and Reception Point (TRP) and at least one candidate TRP. The UE may perform a beam failure detection (BFD) procedure to determine whether a beam failure happens, perform a New Beam Identification (NBI) procedure based on the NBI-RS resource sets allocated by the network nodel, and perform a recovery procedure to a serving TRP or a candidate TRP to reduce the latency of conventional recovery procedure.

## Description

### TECHNICAL FIELD

The disclosed embodiments relate generally to wireless communication, and, more particularly, to method and apparatus for beam failure recovery (BFR) procedure based on new beam identification-reference signal (NBI-RS) resources associated with different transmission and reception points (TRPs) .

### BACKGROUND

The wireless communications network has grown exponentially over the years. A long-term evolution (LTE) system offers high peak data rates, low latency, improved system capacity, and low operating cost resulting from simplified network architecture. LTE systems, also known as the 4G system, also provide seamless integration to older wireless network, such as GSM, CDMA and universal mobile telecommunication system (UMTS). In LTE systems, an evolved universal terrestrial radio access network (E-UTRAN) includes a plurality of evolved Node-Bs (eNodeBs or eNBs) communicating with a plurality of mobile stations, referred to as user equipments (UEs). The 3^{rd} generation partner project (3GPP) network normally includes a hybrid of 2G/3G/4G systems. The next generation mobile network (NGMN) board, has decided to focus the future NGMN activities on defining the end-to-end requirements for 5G new radio (NR) systems.

In conventional 5G technology, beam failure recovery (BFR) procedure is proposed to handle beam tracking issues, e.g. feedback rate for determined channel state may not be frequent enough or sudden blockage results in lost connection. However, in conventional BFR procedure, beam failure can only trigger a procedure for beam switching on the same serving TRP. Therefore, how to reduce the latency in beam failure recovery is worthy of discussion.

### SUMMARY

A first aspect of the invention relates to a method, comprising: determining, by a user equipment (UE), whether a beam failure event happens based on a Beam Failure Detection (BFD) procedure associated with a serving Transmission and Reception Point (TRP); determining, by the UE, whether a new beam is identified based on a New Beam identification (NBI) procedure associated with the serving TRP and at least one candidate TRP; determining, by the UE, whether the new beam is identified from the serving TRP or from the at least one candidate TRP in an event that the new beam is identified; and performing, by the UE, a recovery procedure to the candidate TRP in an event that the new beam is identified from the at least one candidate TRP and the beam failure event happens.

In a first embodiment of the first aspect, the method further comprises: switching, by the UE, to the new beam or switching to the candidate TRP. In a second embodiment of the first aspect in combination with the first embodiment of the first aspect, in switching to the new beam, the method further comprises: transmitting, by the UE, a Beam Failure Recovery (BFR) request using a dedicated uplink (UL) resource through an UL spatial filter to a network node. In a third embodiment of the first aspect in combination with the second embodiment of the first aspect, the dedicated UL resource comprises a dedicated physical random access channel (PRACH) resource, a dedicated physical uplink control channel (PUCCH) resource or a dedicated Medium Access Control-control element (MAC-CE). In a fourth embodiment of the first aspect in combination with the second embodiment of the first aspect, the method further comprises: monitoring, by the UE, a network response on a dedicated downlink (DL)resource based on Quasi Co-Location (QCL) parameters associated with a NBI-reference signal (NBI-RS) resource identified as the new beam. In a fifth embodiment of the first aspect in combination with the fourth embodiment of the first aspect, the dedicated DL resource comprises a dedicated search space set in physical downlink control channel (PDCCH) monitoring, wherein the dedicated search space set is associated with a CORESET, or the dedicated search space set is determined from a serving TRP configuration or from a candidate TRP configuration. In a sixth embodiment of the first aspect in combination with the fourth embodiment of the first aspect, the network response comprises a downlink control information (DCI). In a seventh embodiment of the first aspect in combination with the fourth embodiment of the first aspect, in an event that the network response is monitored, the method further comprises: performing, by the UE, DL reception (Rx) using the QCL parameters associated with the NBI-RS resource identified as the new beam; or performing, by the UE, UL transmission (Tx) using the UL spatial filter used to transmit the BFR request or using a spatial filter corresponding to the NBI-RS resource identified as the new beam. In an eighth embodiment of the first aspect in combination with the first embodiment of the first aspect, in switching to the candidate TRP, the method further comprises: performing, by the UE, a random access channel (RACH) procedure based on a NBI-RS resource identified as the new beam. In a ninth embodiment of the first aspect in combination with the eighth embodiment of the first aspect, the method further comprises: performing, by the UE, a serving TRP switching procedure to detach the serving TRP and switch to the candidate TRP.

A second aspect of the invention relates to a user equipment (UE), comprising a processor that: determines whether a beam failure event happens based on a Beam Failure Detection (BFD) procedure associated with a serving Transmission and Reception Point (TRP); determines whether a new beam is identified based on a New Beam identification (NBI) procedure associated with the serving TRP and at least one candidate TRP; determines whether the new beam is identified from the serving TRP or from the at least one candidate TRP in an event that the new beam is identified; and performs a recovery procedure to the candidate TRP in an event that the new beam is identified from the at least one candidate TRP and the beam failure event happens.

In a first embodiment of the second aspect, the processor further: switches to the new beam or switches to the candidate TRP. In a second embodiment of the second aspect in combination with the first embodiment of the second aspect, the UE further comprises: a transmitter, wherein in switching to the new beam, the transmitter transmits a Beam Failure Recovery (BFR) request using a dedicated uplink (UL) resource through an UL spatial filter to a network node. In a third embodiment of the second aspect in combination with the second embodiment of the second aspect, the dedicated UL resource comprises a dedicated physical random access channel (PRACH) resource, a dedicated physical uplink control channel (PUCCH) resource or a dedicated Medium Access Control-control element (MAC-CE). In a fourth embodiment of the second aspect in combination with the second embodiment of the second aspect, the UE further comprises: a monitoring circuit that monitors a network response on a dedicated downlink (DL)resource based on Quasi Co Location (QCL) parameters associated with a NBI-reference signal (NBI-RS) resource identified as the new beam. In a fifth embodiment of the second aspect in combination with the fourth embodiment of the second aspect, the dedicated DL resource comprises a dedicated search space set in physical downlink control channel (PDCCH) monitoring, wherein the dedicated search space set is associated with a CORESET, or the dedicated search space set is determined from a serving TRP configuration or from a candidate TRP configuration. In a sixth embodiment of the second aspect in combination with the fourth embodiment of the second aspect, the network response comprises a downlink control information (DCI). In a seventh embodiment of the second aspect in combination with the fourth embodiment of the second aspect, in an event that the network response is monitored, the processor further: performs DL reception (Rx) using the QCL parameters associated with the NBI-RS resource identified as the new beam; or performs UL transmission (Tx) using the UL spatial filter used to transmit the BFR request or using a spatial filter corresponding to the NBI-RS resource identified as the new beam. In an eighth embodiment of the second aspect in combination with the first embodiment of the second aspect, in switching to the candidate TRP, the processor further: performs a random access channel (RACH) procedure based on a NBI-RS resource identified as the new beam. In a ninth embodiment of the second aspect in combination with the eighth embodiment of the second aspect, the processor further: performs a serving TRP switching procedure to detach the serving TRP and switch to the candidate TRP.

A beam failure recovery procedure is proposed. The network node may allocate one or more New-Beam-Identification Reference-Signal (NBI-RS) resource sets for a user equipment (UE) and report the allocated NBI-RS resource sets to the UE, wherein the NBI-RS resource sets may be associated with a serving Transmission and Reception Point (TRP) and at least one candidate TRP. The UE may perform a beam failure detection (BFD) procedure to determine whether a beam failure happens, perform a New Beam Identification (NBI) procedure based on the NBI-RS resource sets allocated by the network node1, and perform a recovery procedure to a serving TRP or a candidate TRP to reduce the latency of conventional recovery procedure.

In one embodiment, a UE determines whether a beam failure event happens based on a BFD procedure associated with a serving TRP. The UE determines whether a new beam is identified based on a NBI procedure associated with the serving TRP and at least one candidate TRP. When the beam failure event happens and no new beam is identified based on NBI procedure associated with the serving TRP and at least one candidate TRP, the UE performs the recovery procedure to the serving TRP. When the beam failure event happens and a new beam is identified based on NBI procedure associated with the serving TRP and at least one candidate TRP, the UE determines whether the new beam is identified from the serving TRP or from the at least one candidate TRP. When the new beam is identified from a candidate TRP, the UE performs the recovery procedure to the candidate TRP. When the new beam is identified from the serving TRP, the UE 102 performs the recovery procedure to the serving TRP.

In another embodiment, a NBI method in the BFR procedure may comprise following steps. The UE determines whether a quality of at least one NBI-RS resource associated with a serving Transmission and Reception Point (TRP)is larger than or equal to a first threshold. The UE determines whether a quality of at least one NBI-RS resource associated with at least one candidate TRP is larger than or equal to a second threshold. The UE selects a new beam for a recovery procedure based on determining results associated with the serving TRP and the at least one candidate TRP.

Other embodiments and advantages are described in the detailed description below. This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 is a simplified block diagram of a network node and a user equipment that carry out certain embodiments of the present invention.
Figure 2 is a flow chart of a beam failure recovery (BFR) method in accordance with one novel aspect.
Figure 3 is a flow chart of a new beam identification (NBI) method in accordance with one novel aspect.

### DETAILED DESCRIPTION

Reference will now be made in detail to some embodiments of the invention, examples of which are illustrated in the accompanying drawings.

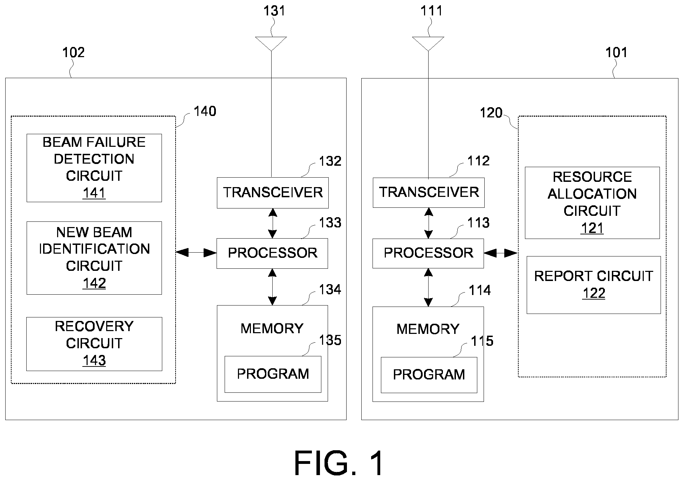

Figure 1 is a simplified block diagram of a network node and a user equipment (UE) that carry out certain embodiments of the present invention. The network node 101 may be a base station (BS) or a gNB, but the present invention should not be limited thereto. The UE 102 may be a smart phone, a wearable device, an Internet of Things (IoT) device, and a tablet, etc. Alternatively, UE 102 may be a Notebook (NB) or Personal Computer (PC) inserted or installed with a data card which includes a modem and RF transceiver(s) to provide the functionality of wireless communication.

Network node 101 has an antenna array 111 having multiple antenna elements that transmits and receives radio signals, one or more RF transceiver modules 112, coupled with the antenna array 111, receives RF signals from antenna array 111, converts them to baseband signal, and sends them to processor 113. RF transceiver 112 also converts received baseband signals from processor 113, converts them to RF signals, and sends out to antenna array 111. Processor 113 processes the received baseband signals and invokes different functional modules 120 to perform features in network node 101. Memory 114 stores program instructions and data 115 to control the operations of network node 101. Network node 101 also includes multiple function modules that carry out different tasks in accordance with embodiments of the current invention.

Similarly, UE 102 has an antenna array 131, which transmits and receives radio signals. A RF transceiver 132, coupled with the antenna, receives RF signals from antenna array 131, converts them to baseband signals and sends them to processor 133. RF transceiver 132 also converts received baseband signals from processor 133, converts them to RF signals, and sends out to antenna array 131. Processor 133 processes the received baseband signals and invokes different functional modules 140 to perform features in UE 102. Memory 134 stores program instructions and data 135 to control the operations of UE 102. UE 102 also includes multiple function modules and circuits that carry out different tasks in accordance with embodiments of the current invention.

The functional modules and circuits 120 and 140 can be implemented and configured by hardware, firmware, software, and any combination thereof. The function modules and circuits 120 and 140, when executed by the processors 113 and 133 (e.g., via executing program codes 115 and 135), allow network node 101 and UE 102 to perform embodiments of the present invention.

In the example of Figure 1, the network node 101 may comprise a resource allocation circuit 121 and a report circuit 122. Resource allocation circuit 121 may allocate one or more New-Beam-Identification Reference-Signal (NBI-RS) resource sets for the UE 102, wherein the NBI-RS resource sets may be associated with a serving Transmission and Reception Point (TRP) and at least one candidate TRP. Report circuit 122 may report the allocated NBI-RS resource sets to the UE 102.

In the example of Figure 1, the UE 102 may comprise a beam failure detection (BFD) circuit 141, a NBI circuit 142 and a recovery circuit 143. BFD circuit 141 may perform BFD procedure to determine whether a beam failure happens. NBI circuit 142 may perform NBI procedure based on the NBI-RS resource sets allocated by the network node 101. Recovery circuit 143 may perform recovery procedure to a serving TRP or a candidate TRP.

In accordance with one novel aspect, the network node 101 may allocate or configure one or more NBI-RS resource sets to the UE 102 through a high layer signaling, e.g., Radio Resource Control (RRC) signaling.

In accordance with one novel aspect, each NBI-RS resource set may comprise at least one NBI-RS resource and each NBI-RS resource set may be associated with a different TRP, e.g., a serving TRP or a candidate TRP. The NBI-RS resource set associated with the serving TRP may be determined from the serving TRP configuration configured by the network node 101. The NBI-RS resource set associated with the candidate TRP may be determined from the serving TRP configuration or the candidate TRP configuration configured by the network node 101. In one embodiment, the UE 102 may perform the NBI procedure based on all configured NBI-RS resource set. In another embodiment, the UE 102 may perform the NBI procedure based on the NBI-RS resource set associated with the serving TRP and at least one NBI-RS resource set associated with a candidate TRP (or candidate TRPs). In an example, the at least one NBI-RS resource set associated with the candidate TRP (or candidate TRPs) is determined according to a layer 3 (L3) measurement, i.e., the UE 102 may know the qualities of all candidate TRPs based on the result of the L3 measurement, and then the UE 102 may select the at least one NBI-RS resource set associated with the candidate TRP (or candidate TRPs) which has higher quality. In another example, the at least one NBI-RS resource set associated with the candidate TRP (or candidate TRPs) is determined according to an activation command, e.g., Medium-Access-Control Control-Element (MAC-CE), i.e., the UE 102 may know which candidate TRP (or candidate TRPs) is activated based on the activation command, and then the UE 102 may select the at least one NBI-RS resource set associated with the candidate TRP (or candidate TRPs) which is activated. In another example, the at least one NBI-RS resource set associated with the candidate TRP (or candidate TRPs) is (or are) determined according to a downlink control information (DCI) indication, i.e., the UE 102 may know which candidate TRP (or candidate TRPs) is activated based on the DCI indication, and then the UE 102 may select the at least one NBI-RS resource set associated with the candidate TRP (or candidate TRPs) which is (or are) activated. In the novel aspect, the UE 102 may maintain the synchronization with at least one of the configured NBI-RS resource set. In an example, the uplink (UL) synchronization is maintained with a configured NBI-RS resource set may include the timing advance for UL transmission is maintained. In another example, the uplink (UL) synchronization is maintained with a configured NBI-RS resource set may include the UL beam (or Transmission-Configuration-Indicator (TCI), spatial relation information) is maintained.

In accordance with another novel aspect, an NBI-RS resource set may comprise one or more NBI-RS resources which may be associated with the same TRP (e.g., a serving TRP or a candidate TRP) or different TRPs (e.g., a serving TRP and at least one candidate TRP). The NBI-RS resource set may be determined from the serving TRP configuration configured by the network node 101. In one embodiment, the UE 102 may perform the NBI procedure based on all configured NBI-RS resources in the NBI-RS resource set. In another embodiment, the UE 102 may perform the NBI procedure based on the NBI-RS resources associated with the serving TRP and at least one NBI-RS resource associated with a candidate TRP (or candidate TRPs) in the NBI-RS resource set. In an example, the at least one NBI-RS resource associated with the candidate TRP (or candidate TRPs) is determined according to a layer 3 (L3) measurement, i.e., the UE 102 may know the qualities of all candidate TRPs based on the result of the L3 measurement, and then the UE 102 may select the at least one NBI-RS resource associated with the candidate TRP (or candidate TRPs) which has higher quality. In another example, the at least one NBI-RS resource associated with the candidate TRP (or candidate TRPs) is determined according to an activation command, e.g., MAC-CE, i.e., the UE 102 may know which candidate TRP (or candidate TRPs) is activated based on the activation command, and then the UE 102 may select the at least one NBI-RS resource associated with the candidate TRP (or candidate TRPs) which is activated. In another example, the at least one NBI-RS resource associated with the candidate TRP (or candidate TRPs) is (or are) determined according to a downlink control information (DCI) indication, i.e., the UE 102 may know which candidate TRP (or candidate TRPs) is activated based on the DCI indication, and then the UE 102 may select the at least one NBI-RS resource associated with the candidate TRP (or candidate TRPs) which is (or are) activated. In the novel aspect, the UE 102 may maintain the synchronization with at least one of the configured NBI-RS resource. In an example, the uplink (UL) synchronization is maintained with a configured NBI-RS resource set may include the timing advance for UL transmission is maintained. In another example, the uplink (UL) synchronization is maintained with a configured NBI-RS resource set may include the UL beam (or Transmission-Configuration-Indicator (TCI), spatial relation information) is maintained.

In accordance with one novel aspect, when an UL timing of one of candidate TRP is maintained, the NBI-RS resource associated with the candidate TRP may comprise a downlink (DL) resource signal (RS) associated with the candidate TRP. In an example, the DL RS may be a pathloss RS for a known UL beam pair link (e.g., for Sounding Reference Signal (SRS) transmission) to the candidate TRP. In another example, the DL RS may be a Quasi-Co-Location (QCL)-TypeD source RS of a pathloss RS for a known UL beam pair link (e.g., for SRS transmission) to the candidate TRP. In another example, the DL RS may be related to QCL assumption for a known UL beam pair link (e.g., for SRS transmission or established during random access channel (RACH) procedure toward the candidate TRP) to the candidate TRP.

In accordance with one novel aspect, when the UE 102 perform the NBI procedure, the UE 102 may determine whether a quality (e.g., layer 1-Reference Signal Received Power(L1-RSRP)) of at least one New Beam identification-Reference signal (NBI-RS) resource associated with a serving TRP is larger than or equal to a first threshold, and determine whether a quality (e.g., L1-RSRP) of at least one NBI-RS resource associated with at least one candidate TRP is larger than or equal to a second threshold. The UE 102 may select a new beam for a recovery procedure of beam failure recovery (BFR) based on the determining results associated with the serving TRP and the at least one candidate TRP.

In an embodiment, if only the quality of the at least one NBI-RS resource associated with the serving TRP is larger than or equal to the first threshold (i.e., the quality of the at least one NBI-RS resource associated with the at least one candidate TRP is not larger than or equal to the second threshold), the UE 102 may select the at least one NBI-RS resource associated with the serving TRP as the new beam for the recovery procedure.

In another embodiment, if only the quality of the at least one NBI-RS resource associated with the at least one candidate TRP is larger than or equal to the second threshold (i.e., the quality of the at least one NBI-RS resource associated with the serving TRP is not larger than or equal to the first threshold), the UE 102 may select the at least one NBI-RS resource associated with the at least one candidate TRP as the new beam for the recovery procedure.

In another embodiment, if the quality of the at least one NBI-RS resource associated with the serving TRP is larger than or equal to the first threshold and the quality of the at least one NBI-RS resource associated with the at least one candidate TRP is larger than or equal to the second threshold, the UE 102 may select the new beam for the recovery procedure based on a predetermined rule. In an example, in the predetermined rule, if the quality of the at least one NBI-RS resource associated with the at least one candidate TRP is larger than the quality of the at least one NBI-RS resource associated with the serving TRP plus an offset value (e.g., 20 dB or 40 dB), UE 102 may select the at least one NBI-RS resource associated with the at least one candidate TRP as the new beam for the recovery procedure. Otherwise, the UE 102 may select the at least one NBI-RS resource associated with the serving TRP as the new beam for the recovery procedure.

In accordance with another novel aspect, when the UE 102 perform the NBI procedure, the UE 102 may determine whether a quality (e.g., L1-RSRP) of at least one New Beam identification-Reference signal (NBI-RS) resource associated with a serving TRP is larger than or equal to a first threshold first. If the quality of the at least one NBI-RS resource associated with the serving TRP is larger than or equal to the first threshold, the UE 102 may select the at least one NBI-RS resource associated with the serving TRP as the new beam for the recovery procedure. If no NBI-RS resource associated with the serving TRP has the quality being larger than or equal to the first threshold, the UE 102 may further determine whether a quality (e.g., L1-RSRP) of at least one NBI-RS resource associated with at least one candidate TRP is larger than or equal to a second threshold. If the quality of the at least one NBI-RS resource associated with the at least one candidate TRP is larger than or equal to the second threshold, the UE 102 may select the at least one NBI-RS resource associated with the at least one candidate TRP as the new beam for the recovery procedure. In this novel aspect, the UE 102 may prioritize to select the at least one NBI-RS resource associated with the serving TRP as the new beam for the recovery procedure if the quality of the at least one NBI-RS resource associated with the serving TRP is larger than or equal to the first threshold.

In accordance with a novel aspect, in the Beam Failure Recovery (BFR) procedure, the UE 102 may determine whether a beam failure event happens based on a Beam Failure Detection (BFD) procedure associated with a serving TRP and determine whether a new beam is identified (or determined) based on the NBI procedure associated with the serving TRP and at least one candidate TRP. If the beam failure event happens and no new beam is identified (or determined) based on the NBI procedure associated with the serving TRP and at least one candidate TRP, the UE 102 may perform the normal recovery procedure for the serving TRP.

If a new beam is identified (or determined) based on the NBI procedure associated with the serving TRP and at least one candidate TRP, the UE 102 may further determine whether the new beam is identified from the serving TRP or from one candidate TRP. In an example, if the new beam is identified from the serving TRP (i.e., a NBI-RS resource associated with the serving TRP is identified as the new beam in the NBI procedure), when the beam failure event happens, the UE 102 may perform the normal recovery procedure to the serving TRP. In another example, if the new beam is identified from one candidate TRP (i.e., a NBI-RS resource associated with a candidate TRP is identified as the new beam in the NBI procedure), when the beam failure event happens, the UE 102 may perform a recovery procedure to the candidate TRP.

In accordance with a novel aspect, when the UE 102 performs the recovery to the candidate TRP, the UE 102 may switch the current beam to the new beam. The UE 102 may transmit a BFR request using a dedicated uplink (UL) resource through an UL spatial filter to the network node 101. In an example, the BFR request may be transmitted by the spatial filter which is determined according to the NBI-RS resource identified as the new beam. In another example, the BFR request may be transmitted by the spatial filter which is used for transmitting physical random access channel (PRACH) or sounding reference signal (SRS) to the candidate TRP. The dedicated UL resource comprises a dedicated PRACH resource, a dedicated physical uplink control channel (PUCCH) resource or a dedicated MAC-CE on physical uplink shared channel (PUSCH) resource.

After the UE 102 transmits the BFR request to the network node 101, a monitoring circuit (not shown in figures) of the UE 102 may monitor a network response for the BFR request on a dedicated downlink (DL)resource based on Quasi Co Location (QCL) parameters associated with the NBI-RS resource which is identified as the new beam. In an example, the dedicated DL resource may comprise a dedicated search space set in physical downlink control channel (PDCCH) monitoring. In an example, the dedicated search space set may be associated with a CORESET without QCL information being indicated by network node 101. In another example, the dedicated search space set may be determined from a serving TRP configuration or from a candidate TRP configuration. The network response comprises a downlink control information (DCI). In an example, the DCI may have cyclic redundancy check (CRC) scrambled by Cell- Radio Network Temporary Identifier (C-RNTI) or Modulation and Coding Scheme-C-RNTI (MCS-C-RNTI) and the DCI is detected on the dedicated search space set. In another example, the DCI may schedules a PUSCH with a same Hybrid Automatic Repeat reQuest (HARQ) process number as the dedicated MAC-CE and the DCI may have a toggled New Data Indicator (NDI).

After the UE 102 receives (or detects or monitors) the network response from the network node 101, the UE 102 may perform DL reception (Rx) or perform UL transmission (Tx). In an example, the UE may use the QCL parameters associated with the NBI-RS resource identified as the new beam to perform DL reception (Rx). In another example, the UE 102 may use a UL spatial filter used to transmit the BFR request or a spatial filter corresponding to the NBI-RS resource identified as the new beam to perform UL transmission (Tx).

In accordance with a novel aspect, when the UE 102 performs the recovery to the candidate TRP, the UE 102 may switch the serving TRP to the candidate TRP. The UE 102 may perform a random access channel (RACH) procedure based on a NBI-RS resource identified as the new beam. In an example, PRACH resource (or occasion) for the RACH procedure may be delivered from the NBI-RS. The UE 102 may perform a serving TRP switching (or change, handover) procedure to detach the serving TRP and switch to the candidate TRP (i.e., the candidate TRP is taken as a target TRP). In an example, the UE 102 may detach the serving TRP, apply the corresponding candidate TRP configuration for the candidate TRP, synchronize to the candidate TRP, and/or complete the RRC handover procedure by sending *RRCReconfigurationComplete* message to the candidate TRP.

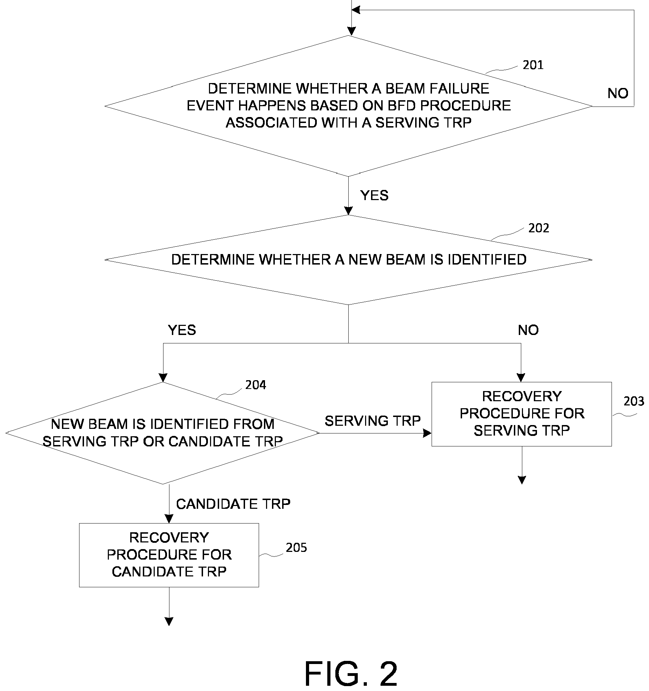

Figure 2 is a flow chart of a beam failure recovery (BFR) method in accordance with one novel aspect. In step 201, the UE 102 determines whether a beam failure event happens based on a Beam Failure Detection (BFD) procedure associated with a serving Transmission and Reception Point (TRP).

In step 202, the UE 102 determines whether a new beam is identified based on a New Beam identification (NBI) procedure associated with the serving TRP and at least one candidate TRP.

In step 203, when the beam failure event happens and no new beam is identified based on NBI procedure associated with the serving TRP and at least one candidate TRP, the UE 102 performs the recovery procedure to the serving TRP.

In step 204, when the beam failure event happens and a new beam is identified based on NBI procedure associated with the serving TRP and at least one candidate TRP, the UE 102 determines whether the new beam is identified from the serving TRP or from the at least one candidate TRP.

In step 205, when the new beam is identified from a candidate TRP, the UE 102 performs the recovery procedure to the candidate TRP. When the new beam is identified from the serving TRP, the UE 102 performs the recovery procedure to the serving TRP (step 204).

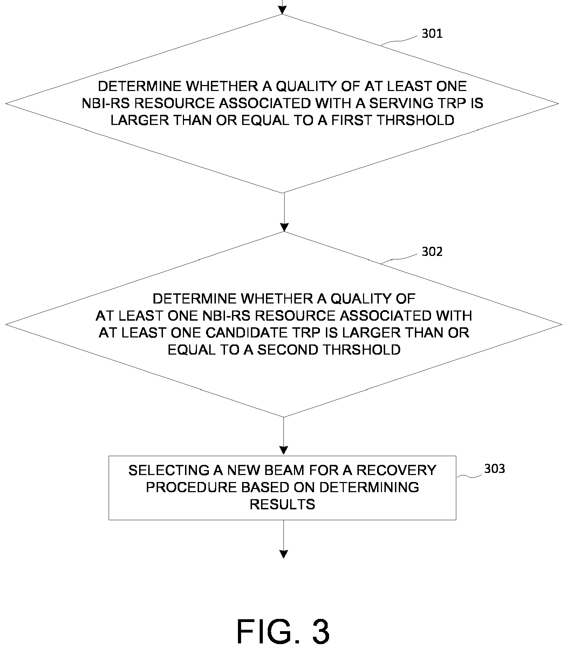

Figure 3 is a flow chart of a new beam identification (NBI) method in accordance with one novel aspect. In step 301, the UE 102 determines whether a quality of at least one New Beam identification-Reference signal (NBI-RS) resource associated with a serving Transmission and Reception Point (TRP)is larger than or equal to a first threshold.

In step 302, the UE 102 determines whether a quality of at least one NBI-RS resource associated with at least one candidate TRP is larger than or equal to a second threshold.

In step 303, the UE 102 selects a new beam for a recovery procedure based on determining results associated with the serving TRP and the at least one candidate TRP in steps 302 and 303.

In an embodiment, in step 303, when only the quality of the at least one NBI-RS resource associated with the serving TRP is larger than or equal to the first threshold, the UE 102 selects at least one NBI-RS resource associated with the serving TRP as the new beam for the recovery procedure.

In another embodiment, in step 303, when only the quality of the at least one NBI-RS resource associated with the at least one candidate TRP is larger than or equal to the second threshold, the UE 102 selects the at least one NBI-RS resource associated with the at least one candidate TRP as the new beam for the recovery procedure.

In another embodiment, in step 303, when the quality of the at least one NBI-RS resource associated with the serving TRP is larger than or equal to the first threshold and the quality of the at least one NBI-RS resource associated with the at least one candidate TRP is larger than or equal to the second threshold, the UE 102 selects the new beam for the recovery procedure based on a predetermined rule. In an example, the predetermined rule comprises that the UE 102 may select the at least one NBI-RS resource associated with the at least one candidate TRP as the new beam for the recovery procedure when the quality of the at least one NBI-RS resource associated with the at least one candidate TRP is larger than the quality of the at least one NBI-RS resource associated with the serving TRP plus an offset value.

In another embodiment, in step 303, the UE prioritizes to select the at least one NBI-RS resource associated with the serving TRP as the new beam for the recovery procedure in an event that the quality of the at least one NBI-RS resource associated with the serving TRP is larger than or equal to the first threshold.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method, comprising:
determining (201), by a user equipment, UE, whether a beam failure event happens based on a Beam Failure Detection, BFD, procedure associated with a serving Transmission and Reception Point, TRP;
determining (202), by the UE, whether a new beam is identified based on a New Beam identification, NBI, procedure associated with the serving TRP and at least one candidate TRP;
determining (204), by the UE, whether the new beam is identified from the serving TRP or from the at least one candidate TRP in an event that the new beam is identified; and
performing (205), by the UE, a recovery procedure to the candidate TRP in an event that the new beam is identified from the at least one candidate TRP and the beam failure event happens.

2. The method of Claim 1, further comprising:
switching, by the UE, to the new beam or switching to the candidate TRP.

3. The method of Claim 2, wherein in switching to the new beam, the method further comprises:
transmitting, by the UE, a Beam Failure Recovery, BFR, request using a dedicated uplink, UL, resource through an UL spatial filter to a network node.

4. The method of Claim 3, wherein the dedicated UL resource comprises a dedicated physical random access channel, PRACH, resource, a dedicated physical uplink control channel, PUCCH, resource or a dedicated Medium Access Control-control element, MAC-CE.

5. The method of Claim 3, further comprising:
monitoring, by the UE, a network response on a dedicated downlink, DL, resource based on Quasi Co-Location, QCL, parameters associated with a NBI-reference signal, NBI-RS, resource identified as the new beam.

6. The method of Claim 5, wherein the dedicated DL resource comprises a dedicated search space set in physical downlink control channel, PDCCH, monitoring, wherein the dedicated search space set is associated with a CORESET, or the dedicated search space set is determined from a serving TRP configuration or from a candidate TRP configuration;
or wherein the network response comprises a downlink control information, DCI;
or wherein, in an event that the network response is monitored, the method further comprises:
performing, by the UE, DL reception, Rx, using the QCL parameters associated with the NBI-RS resource identified as the new beam; or
performing, by the UE, UL transmission, Tx, using the UL spatial filter used to transmit the BFR request or using a spatial filter corresponding to the NBI-RS resource identified as the new beam.

7. The method of Claim 2, wherein, in switching to the candidate TRP, the method further comprises:
performing, by the UE, a random access channel, RACH, procedure based on a NBI-RS resource identified as the new beam.

8. The method of Claim 7, further comprising:
performing, by the UE, a serving TRP switching procedure to detach the serving TRP and switch to the candidate TRP.

9. A user equipment (102), UE, comprising:
a processor (133) that:
determines (201) whether a beam failure event happens based on a Beam Failure Detection, BFD, procedure associated with a serving Transmission and Reception Point, TRP;
determines (204) whether a new beam is identified based on a New Beam identification, NBI, procedure associated with the serving TRP and at least one candidate TRP;
determines (204) whether the new beam is identified from the serving TRP or from the at least one candidate TRP in an event that the new beam is identified; and
performs (205) a recovery procedure to the candidate TRP in an event that the new beam is identified from the at least one candidate TRP and the beam failure event happens.

10. The UE (102) of Claim 9, wherein the processor (133) further:
switches to the new beam or switches to the candidate TRP.

11. The UE (102) of Claim 10, further comprising:
a transmitter (132),
wherein in switching to the new beam, the transmitter (132) transmits a Beam Failure Recovery, BFR, request using a dedicated uplink, UL, resource through an UL spatial filter to a network node (101).

12. The UE (102) of Claim 11, wherein the dedicated UL resource comprises a dedicated physical random access channel, PRACH, resource, a dedicated physical uplink control channel, PUCCH, resource or a dedicated Medium Access Control-control element, MAC-CE.

13. The UE (102) of Claim 11, further comprising:
a monitoring circuit that monitors a network response on a dedicated downlink, DL, resource based on Quasi Co Location, QCL, parameters associated with a NBI-reference signal, NBI-RS, resource identified as the new beam.

14. The UE (102) of Claim 13, wherein the dedicated DL resource comprises a dedicated search space set in physical downlink control channel, PDCCH, monitoring, wherein the dedicated search space set is associated with a CORESET, or the dedicated search space set is determined from a serving TRP configuration or from a candidate TRP configuration;
or wherein the network response comprises a downlink control information, DCI;
or wherein, in an event that the network response is monitored, the processor (133) further:
performs DL reception, Rx, using the QCL parameters associated with the NBI-RS resource identified as the new beam; or
performs UL transmission, Tx, using the UL spatial filter used to transmit the BFR request or using a spatial filter corresponding to the NBI-RS resource identified as the new beam.

15. The UE (102) of Claim 10, wherein, in switching to the candidate TRP, the processor (133) further performs a random access channel, RACH, procedure based on a NBI-RS resource identified as the new beam,
or wherein the processor (133) further performs a serving TRP switching procedure to detach the serving TRP and switch to the candidate TRP.
